Europäisches Patentamt

European Patent Office

Office européen des brevets

(19)

(11) **EP 0 454 275 B1**

(12) **EUROPEAN PATENT SPECIFICATION**

(45) Date of publication and mention
of the grant of the patent:
**03.07.1996 Bulletin 1996/27**

(51) Int Cl.6: **H04N 1/46**

(21) Application number: **91201309.1**

(22) Date of filing: **24.04.1991**

(54) **Color separation method**

Farbtrennungsverfahren

Procédé de séparation des couleurs

(84) Designated Contracting States:
**BE DE FR GB**

(30) Priority: **26.04.1990 US 514728**

(43) Date of publication of application:
**30.10.1991 Bulletin 1991/44**

(73) Proprietor: **Bayer Corporation
Pittsburgh, PA 15219-2502 (US)**

(72) Inventor: **Delabastita, Paul A.
Boston MA 02116 (US)**

(74) Representative: **Ramon, Charles Lucien et al
Agfa-Gevaert N.V.
Dienst Intellectuele Eigendom 3800
Septestraat 27
2640 Mortsel (BE)**

(56) References cited:
**EP-A- 0 203 448**          **GB-A- 2 213 674**

- **PROCEEDINGS OF THE SID. vol. 30, no. 3, 1989,
  NEW YORK, USA pages 183 - 190; P. LAIHANEN:
  'OPTIMIZATION OF DIGITAL COLOR
  REPRODUCTION ON THE BASIS OF VISUAL
  ASSESSMENT OF REPRODUCED IMAGES'**
- **PATENT ABSTRACTS OF JAPAN vol. 011, no.
  145 (E-505)12 May 1987 & JP-A-61 281 768**
- **PATENT ABSTRACTS OF JAPAN vol. 012, no.
  246 (E-632)12 July 1988 & JP-A-63 035 072**

## Description

The present invention relates to color reproduction processes and, more particularly, to a method for color separation. The present invention is related to the invention described in EP application EP-A-0 454 273 for "RGB Color Database and method for Creating Same", filed simultaneously herewith.

Three basic models have been described in the literature for the relation between a color and its CMYK reproduction dot areas.

### Masking equations.

The masking equations calculate the CMY dot percentages of a color from its RGB density values. The underlying concept is that every ink has to compensate for the densities of the unwanted side absorptions in the two other inks. Black is calculated based on the equivalent neutral density of the color. There are three variations of the masking equations:

1. Linear masking equations. The CMY dot areas are linear functions of the RGB densities. Since only 3 colors can be exactly corrected using this approach, it is insufficient for high quality lithographic reproduction.
2. Higher order polynomials. By adding higher order terms to the linear masking equations, exact compensation can be obtained for more points. The problem with this approach is that the higher order terms tend to produce oscillations, causing color deviations inbetween the calibrated points. The method can be improved by not trying to make the compensations exact in a number of points, but rather to minimize the RMS error of the reproduction process over the whole printable gamut, starting from a large number of color samples, and using a regression technique to calculate the polynomial coefficients.
3. Linear masking with different coefficients for the "white" and "black" colors. Exact correction can be achieved for six colors. For the cyan ink e.g., different masking coefficients are used for colors with a high red density than for colors with a low red density. This technique, which is used in most scanners, can be made to work very well, and is the only realistic choice if the color correction needs to be done using analog circuitry.

The masking equation technique for color correction has its limitations:

1. From a theoretical viewpoint, the masking equations describe a density based reproduction process (e.g. photographic processes or a thermal sublimation process). The lithographic reproduction process is different in that the colors are obtained (at least in first order) by mixing DOT SIZES, rather than INK DENSITIES.
2. The masking equations are based on a model to compensate for unwanted ink side absorptions, but do not predict well what the effect of the black ink is on the color. This gives problems when high levels of black ink are used, as in the case of high GCR levels.

### Calibration based on empirical data

In this method, a large number of CMYK color samples is generated, measured and the color of each color sample is stored in a table. For the reproduction of a color, a table look-up and interpolation technique are used to predict the CMYK reproduction values. The method can be made very accurate, for whatever reproduction process, but has a number of serious drawbacks:

1. The calibration process is tedious: many samples have to be made and measured for every individual calibration.
2. The model lacks flexibility: since the calibration model does not reflect how the reproduction process actually works, it does not allow for an easy way to change the calibration if only one or more of the printing conditions changes. Since this model is "dumb", the calibration data also contains a lot of redundancy.
3. The model does not provide a "natural" way to handle colors that are out of the printable gamut colors. Additional algorithms are required to do this.

Probably the most useful application of this technique is to use it as a "second order correction" for another reasonably accurate but more simple, calibration process.

### The Neugebauer equations

Based on the fact that the dots of 4 different inks produce only 16 different combinations of overlap, and on the assumption that the relative position of the dots can be considered random (as a result of the use of 30 degree different screening angles), the Neugebauer equations predict the tristimulus values of a color as a function of the effective CMYK dot areas. An in-depth explanation of the Neugebauer equations is found in Yule, Principles of Color Reproduction, Wiley & Sons, 1967.

Of all known models, the Neugebauer equations describe most accurately how the lithographic color reproduction process works. They also predict well what the effect of the black printer is on the color. It is possible to make the color correction exact for 16 colors (including 8 combinations with black ink). Until now, the Neugebauer equations have not been widely used, probably for the following reasons:

1. The use of the Neugebauer equations for the RGB to CMYK color separation process requires the use of an iterative technique and a digital computer (analog implementations have never been successful). Problems arise to make the iteration "well behaved". Because the iterations are computationally intensive, the results have to be stored in look up tables.

2. The basis for the calculation of the optimal Neugebauer coefficients (with respect to neutral balance, saturation ...) are not widely known. Several attempts in the past ("N-modified" Neugebauer equations ...) were only marginally successful, and have resulted in a bad reputation of the Neugebauer model itself.

**Mathematical analysis of the Neugebauer equations The Neugebauer equations**

Mathematically the simplest form of the Neugebauer equations is:

$$R = a0 + a1*C + a2*M + a3*Y + a4*K + a5*C*M + a6*C*Y +$$

$$a7*C*K + a8*M*Y + a9*M*K + a10*Y*K + a11*M*Y*K +$$

$$a12*C*Y*K + a13*C*M*K + a14*C*M*Y + a15*C*M*Y*K$$

$$G = b0 + b1*C + b2*M + b3*Y +b4*K + b5*C*M + b6*C*Y +$$

$$b7*C*K + b8*M*Y + b9*M*K + b10*Y*K + b11*M*Y*K +$$

$$b12*C*Y*K + b13*C*M*K + b14*C*M*Y + b15*C*M*Y*K$$

$$B = c0 + c1*C + c2*M + c3*Y + c4*K + c5*C*M + c6*C*Y +$$

$$c7*C*K + c8*M*Y + c9*M*K + c10*Y*K + c11*M*Y*K +$$

$$c12*C*Y*K + c13*C*M*K + c14*C*M*Y + c15*C*M*Y*K$$

A shorter form is:

$$R = f(C,M,Y,K)$$

$$G = g(C,M,Y,K)$$

$$B = h(C,M,Y,K)$$

The 48 coefficients can be found by solving three sets of linear 16x16 equations with the 16 RGB values known for 16 CMYK combinations. The Neugebauer equations are linear, 50 their first partial derivatives can be calculated.

**Iterative solution of the Neugebauer equations**

The Neugebauer equations express a color as a function of the CMYK dot areas. For color separation of RGB data into CMYK data the opposite relationship is needed. No analytical solution exists, but an iterative technique, based on the Newton Raphson algorithm can be used. If the K value is kept constant, the following relations exist for small CHANGES of CMY and RGB around a given color Q (the partial derivatives are evaluated in the color Q):

$$\begin{vmatrix} dR \\ dG \\ dB \end{vmatrix} = \begin{vmatrix} df/dC & df/dM & df/dY \\ dg/dC & dg/dM & dg/dY \\ dh/dC & dh/dM & dh/dY \end{vmatrix} * \begin{vmatrix} dC \\ dM \\ dY \end{vmatrix}$$

This relation can be reversed, so that dC, dM, and dY can be expressed as a function of dR, dG and dB. Knowing this, it is possible to define an iteration step to find CMY values as a function of RGB data:

tart values:        sC1, M1, Y1
desired color:      R G B
K:                      at a preset fixed value

$$R1 = f(C1,M1,Y1,K)$$

$$G1 = g(C1,M1,Y1,K)$$

$$B1 = h(C1,M1,Y1,K)$$

$$dR = R1 - R$$

$$dG = G1 - G$$

$$dB = B1 - B$$

$$
\begin{vmatrix} dC \\ dM \\ dY \end{vmatrix} =
\begin{vmatrix} df/dC & df/dM & df/dY \\ dg/dC & dg/dM & dg/dY \\ dh/dC & dh/dM & dh/dY \end{vmatrix}^{-1}
* \begin{vmatrix} dR \\ dG \\ dB \end{vmatrix}
$$

$$C2 = C1 - dC$$

$$M2 = M1 - dM$$

$$Y2 = Y1 - dY$$

K remains constant during the iteration.

$$R2 = f(C2,M2,Y2,K)$$

$$G2 = g(C2,M2,Y2,K)$$

$$B2 = h(C2,M2,Y2,K)$$

The iteration requires a reasonable startpoint for the CMY values. The following relations, that are obtained by neglecting the higher order terms in the original Neugebauer equations, can be used:

$$R - a4*K = a0 + a1*C + a2*M + a3*Y$$

$$G - b4*K = b0 + b1*C + b2*M + b3*Y$$

$$B - c4*K = c0 + c1*C + c2*M + c3*Y$$

from which CMY can be eliminated. Simpler, but also effective to obtain good start values is the following:

$$C = 1.0 - R$$

$$M = 1.0 - G$$

$$Y = 1.0 - B$$

The iteration is stopped when the CMY values have become stable.

**Determination of the black ink value**

The black has to serve two purposes:

1. It has to extend the reproducible color gamut in the dark tones. An empirical formula can be used to add black in the dark neutrals for this purpose. A black separation that is obtained this way is sometimes called "skeleton black" in the literature.

2. Black can also be used to replace the colored CMY inks. Theoretically it is possible to reproduce every color (except the very darkest) of the printable color gamut by combining at most two colored inks (which will determine the hue of the reproduced color) with a certain amount of black ink (to give the color its proper tone and saturation value). This technique is called GCR. Neutral tints are reproduced with black only in that case. GCR produces lower total ink values in the dark tones (allowing for higher press speeds) and results in a reduction of the use of the colored inks, which saves costs and makes the color balance more stable.

Usually the optimal black is a value in between the two previous extremes.

Instead of keeping K constant during the iteration, it is also possible to keep one of the colored inks constant and to iterate for the two other colored inks and K. For example, to calculate the ink values at 100% CGR, the colored ink that is replaced by black is kept constant and equal to zero.

## Separation algorithms in PIX

## Calculation of the Neugebauer coefficients

## Basic approach

It is theoretically rather easy to calculate the Neugebauer coefficients. The procedure is as follows:

1. Generate 16 color samples on a press or proofing device with 16 different combinations of CMYK values. Traditionally, but in the most general case not necessarily, these 16 combinations are the 16 permutations of 0% and 100% of the inks.

2. Obtain the tristimulus values of each of the 16 color samples, assuming a reference neutral illuminant (D5000 in the Graphic Arts industry). These are usually (but not necessarily) RGB tristimulus values, obtained by measuring the XYZ tristimulus values using a colorimeter or spectrophotometer, and converting them into the RGB primary system by means of a 3 by 3 matrix multiplication.

3. Three sets of linear equations, with the Neugebauer coefficients as the unknowns, can be made up by filling in the 16 the CMYK dot percentages and the corresponding tristimulus values in the Neugebauer equations.

4. The 48 Neugebauer coefficients are then obtained by solving these 3 sets of 16 equations.

It has been found that the above approach does not produce Neugebauer coefficients that are practically usable. The following problems were encountered:

1. The neutral balance is not correct. When CMYK data that is supposed to produce neutral colors are evaluated in the Neugebauer equations with the previous coefficients, tristimulus values are obtained that do not correspond with the reference neutral. Three possible explanations for this are: the effect of the non neutrality of the paper on which the original 16 color samples are reproduced (most noticeable in the extreme highlights), some inherent inaccuracy of the Neugebauer model, and measurement errors of the original 16 color samples.

2. The iteration process to solve CMYK from the tristimulus values of a given color does not converge well if the color is dark. The explanation for this is that if iterations are made for colors that are almost as dark, or darker than these calibration color samples that contain the 100% black ink, the solution of the problem becomes poorly conditioned. Another way of looking at this is to consider that the colors obtained by combining a high percentage of black with any of the other colored inks will result in "almost" the same black color. Inversely, the iteration "does not know well" what ink values it should converge to, in order to reproduce a given dark color.

3. The CMYK color reproduction process of printing presses is particularly weak in the reproduction of saturated blues. When attempting to reproduce these colors with the previous coefficients, often cyan ink values are obtained that are greater than 100%. A disturbing discontinuity of the hue occurs when in a color transition, suddenly the cyan value clips at 100% ink, while the magenta ink value (still below 100%) continues to increase. To a lesser extent the same happens in the reproduction of very saturated red or green colors.

EP-A-0 203 448 addresses the problem of matching hard copy color to display color. It proposes the solution of defining a new MSW color space, which restricts the hard copy colors to some percentage of binary mixture of inks, some percentage of single ink, and some percentage of white. The color data in XYZ space are converted to MSW space, with unreachable colors being mapped into reachable colors. In contrast, the present invention proposes a solution in the calibration process for converting color data in RGB space to color data in CMY or CMYK space.

It is accordingly a general object of the present invention to provide an improved method of color separation.

It is a specific object of the invention to provide a method of color separation that utilizes the Neugebauer coefficients.

It is a further object of the invention to provide a method of color separation in which a set of "virtual" colors, as opposed to "measured" colors, are used to calculate the Neugebauer coefficients.

## BRIEF DESCRIPTION OF THE INVENTION

In order to achieve the above objects, a color separation method is used, for a color reproduction process the said process requiring a relation between (tristimulus) color values of a l color and its CMY or CMYK reproduction dot areas, ink values or colorant densities, the said method comprising the steps of :

A. generating a plurality of color samples ;
B. measuring color values of said color samples to obtain a set of measured original colors ;
C. defining a set of virtual colors from said set of measured original colors by changing measured color values ;
D. calculating Neugebauer coefficients based upon said set of virtual colors.

A set of "virtual" colors is employed to calculate the Neugebauer coefficients. The "virtual", as opposed to measured, colors are related to the original colors. A triangular chromaticity gamut of virtual R', G', B' primaries is established based upon the RGB primaries of a color display monitor and the chromaticity gamut of the printing inks. Both the display and printing ink chromaticity gamuts are included in the triangular chromaticity gamut of the virtual R', G', B' primaries. Saturation of the CM, CY, and MY primaries is increased without changing the hue of these primaries. The resulting CM', CY', and MY' primaries constitute virtual primaries that lie within the chromaticity gamut of the printing inks and are included in the triangular chromaticity gamut of the virtual R', G', B' primaries.

## BRIEF DESCRIPTION OF THE DRAWINGS

The objects and features of the invention will best be understood from a detailed description of a preferred embodiment thereof, selected for purposes of illustration and shown in the accompanying drawings in which:

Figure 1 is a CIE type chromaticity diagram illustrating the chromaticity gamut of the RGB primaries of the color display monitor or device, the chromaticity gamut of the printing inks, and the chromaticity gamut of the virtual R', G', and B' primaries; and,

Figure 2 is a diagram illustrating the black curve generation for GCR percentages of 0, 25, 50, 75, and 100%.

## DETAILED DESCRIPTION OF THE INVENTION

In order to overcome the previously mentioned problems with this calculation of the Neugebauer coefficients, a "virtual" set of colors is used to calculate the Neugebauer coefficients.

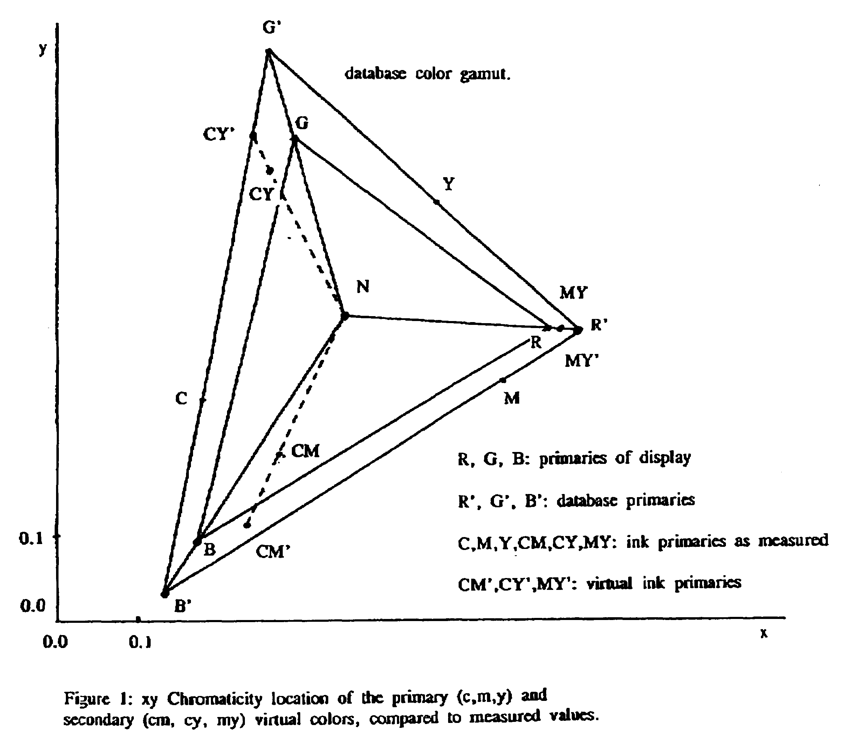

Reference is made to the related application cited above for a discussion of the "virtual" color RGB database and the relationship of the chromaticity gamuts shown in Figure 1. The subject matter of said application is incorporated herein by reference.

The issues of saturation of the CM, CY, and MY primaries, neutral balance and iteration stability are addressed as follows:

1. The saturation of the CM, CY and MY primaries is increased (the hue is left unchanged). The effect of this is that the calibration of a "virtual" printing process is obtained that has a wider saturation gamut than the real printing process. A separation algorithm that is calibrated on this virtual printing process will not produce the problems as described in point 3 of the previous paragraph. The trade off is that the saturation of colors that have a hue determined by CM, CY or MY will be slightly reduced.

It has been found, however, that this desaturation is far less objectionable than the hue shifts caused by CMYK clipping of over-saturated colors. A global desaturation for these hues is even the preferable technique over a "projection" technique where out of saturation gamut colors are projected on the printable saturation gamut, since the first one preserves the saturation differences. Figure 1 shows how the CM, CY and MY primaries have been shifted.

2. The neutral balance requirement is obtained by changing the relative lightness of the measured primaries, leaving their hue and saturation unchanged for this purpose. In the highlight and quarter tones, the neutral balance is primarily affected by the relative densities of the C, M, and Y inks. By multiplying each of these three densities by different factors (which preferably have an average value of 1.0), it is possible to obtain a neutral balance at, for example, 12%C, 9%M and 9%Y. In the mid tones and three quarter tones, the neutral balance is primarily affected by the relative strength of the CM, CY and MY overprints. So it is possible to obtain neutral balance at, for example, 65%C, 55%M and 55%Y by multiplying the measured densities of the CM, CY and MY overprints by appropriate factors (which, again, preferably have an average value of 1.0).

There is an interdependency between the neutral balance of the quarter tones and three quarter tones, so several passes are made to obtain the optimal multiplication factors for the C, M, Y, CM, CY, and MY densities. In the deep shadows, the neutral balance is primarily affected by the color of the CMY triple overprint. The measured chromaticity of this sample is changed so that, for example, neutral is obtained at 95%C, 85%M, 85%Y. The measured color of the black ink is also changed to be exactly neutral. The result of all these operations is that neutral balance is obtained for three combinations of CMY values in three different parts of the tone scale. It has been found that this "three point calibration" of the neutral scale is also quite satisfactory for the other points on the neutral scale.

3. In order to improve the stability of the iterations for dark colors, the tristimulus values of the quadruple CMYK overprint are divided by a large number, typically 100. This has the effect of simulating a press that is able to print very dark colors and solves the problem of poor numerical condition in the dark part of the color gamut. It results also in a desirable form of tone compression in the extreme dark part of the tone scale.

Having saturation compression, neutral balancing and tone compression built in to the Neugebauer coefficients has the significant advantage that a simple, consistent and reliable conversion is available, back and forth, between the tristimulus values and the CMYK reproduction values, without that additional compression, mapping or projection techniques are necessary. This greatly simplifies color separation software.

**Calculation of the black ink in PIX**

The black ink curve is interpolated between a "skeleton" black curve, and a "100% GCR" black curve. The interpolation factor is the GCR level.

**The skeleton black curve**

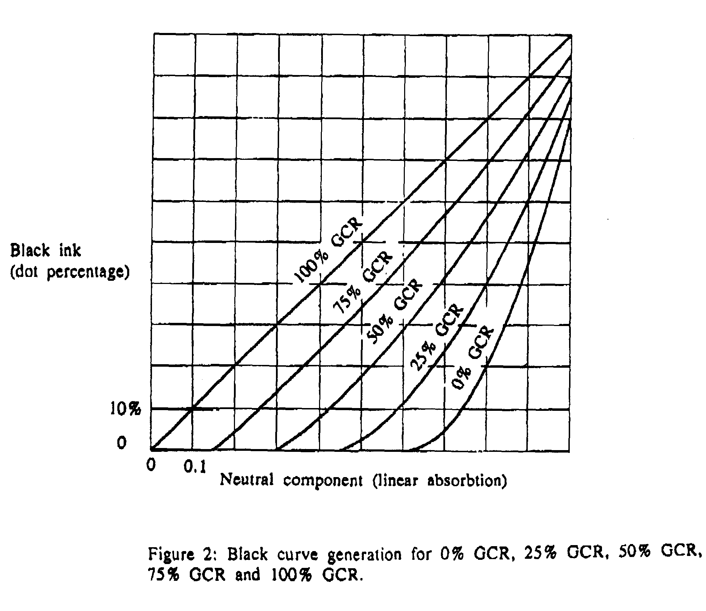

The skeleton black is based on the neutral RGB component. A parabolic curve is used that starts at a given point k_start, and reaches a certain maximum value k_max for 100% neutral component. The minimum of the complement of the RGB tristimulus values is determined and the parabolic curve is applied to it. The skeleton black value is made equal to this minimum. See Figure 2.

**The GCR black**

This is by definition the maximum amount of black to reproduce a given color. Typically one, two or three of the colored inks are zero with this black.

Sequentially, one first determines if the color contains a neutral component or not by iterating for CMY values with black equal to zero. If all three CMY values are positive, there is a neutral component. If not, the GCR black is set to zero. The next determination is which one of the colored inks is most likely going to be replaced by black. This is done by determining the minimum value of the CMY with 0% black. This ink is then set to zero, and an iteration is made to obtain a black value and two colored ink values. If the two colored ink values are positive, a valid solution for the 100% GCR black is found. If one of the colored inks turns out to be negative, then this colored ink is replaced by black, and a new iteration is done.

This process is repeated until a set of ink values is found with one colored ink value equal to zero, and the two other ink values greater than or equal to zero in combination with a positive black ink value. This method for the calculation of the 100% GCR black usually converges fast. However, for colors close to the neutral, the process sometimes tends to oscillate. For these colors the secant method is used to determine the maximum amount of black that just not causes one of the colored inks to become negative.

**The black curve**

The black that is used is an average of the "skeleton" black and the "100% GCR black", as is demonstrated by Figure 2. Once the black value is obtained, a set of CMY values are iterated to reproduce the given color in combination with that black.

### Luminance clipping

The saturation compression of the colors has been described above. However, even if a color falls within the printable saturation gamut, it may still fall outside the luminance gamut of the CMYK reproduction process. Typically this results in negative ink values for one of the colored inks. Clipping the negative colored ink value to zero results in luminance and hue and saturation shifts. This has been noticed in the separation of red colors that were both very saturated and bright.

The hue shifts as a result of luminance clipping can be avoided in the following way. If the separation of a color produces a negative colored ink, the separation software divides the value of that ink by a large factor (typically 10), and reiterates, keeping the reduced negative ink value constant, but allowing the black ink instead to change. Typically the result of this operation is now a negative black ink value. When this negative black ink value is clipped to zero, it will cause an error of the lightness of the reproduced color only, while the hue and saturation will be correct.

Having described in detail a preferred embodiment of the invention, it will now be apparent to those skilled in the art that numerous modifications can be made therein without departing from the scope of the invention as defined in the following claims.

### Claims

1. A color separation method, for a color reproduction process the said process requiring a relation between (tristimulus) color values of a color and its CMY or CMYK reproduction dot areas, ink values or colorant densities, the said method comprising the steps of :

    A. generating a plurality of color samples ;
    B. measuring color values of said color samples to obtain a set of measured original colors ;
    C. defining a set of virtual colors from said set of measured original colors by changing measured color values ;
    D. calculating Neugebauer coefficients based upon said set of virtual colors.

2. Method according to claim 1, wherein the step of changing measured color values comprises increasing saturation of CM, CY and MY primaries, without changing hues of these primaries.

3. Method according to any of the preceding claims, wherein the step of changing measured color values comprises changing relative lightness of measured color values, while leaving their hue and saturation unchanged.

4. Method according to any of the preceding claims, wherein :

    A. the step of generating a plurality of color samples is established by generating 16 color samples with 16 different combinations of CMYK values ; and
    B. the step of measuring color values is established by obtaining tristimulus values of each of the 16 color samples, making up said set of measured original colors.

5. Method according to claim 4, wherein said 16 combinations are the 16 permutations of 0% and 100% of inks.

6. Method according to claim 4, wherein the tristimulus values are RGB values, which may be obtained by measuring XYZ tristimulus values.

7. Method according to any of the preceding claims, wherein said color samples are generated on a press or proofing device.

### Patentansprüche

1. Farbauszugsverfahren für ein Farbreproduktionsverfahren, wobei das Farbreproduktionsverfahren eine Beziehung zwischen (Norm-)Farbwerten einer Farbe und ihren CMY- oder CMYS-Reproduktionsflächendeckungen, ihren Druckfarbwerten oder Farbstoffdichten erfordert, wobei das Farbauszugsverfahren folgende Schritte umfaßt:

    A. Erzeugen einer Mehrzahl von Farbmustern;
    B. Messen der Farbwerte der Farbmuster, um einen Satz von gemessenen Originalfarben zu erhalten;

C. Definieren eines Satzes virtueller Farben von dem Satz gemessener Originalfarben durch Ändern der gemessenen Farbwerte;
D. Berechnen der Neugebauer-Koeffizienten auf der Basis dieses Satzes virtueller Farben.

**2.** Verfahren nach Anspruch 1, wobei der Schritt des Änderns der gemessenen Farbwerte umfaßt, die Sättigung der Primärfarben CM, CY und MY zu steigern, ohne die Farbtöne dieser Primärfarben zu ändern.

**3.** Verfahren nach einem der vorhergehenden Ansprüche, wobei der Schritt des Änderns der gemessenen Farbwerte umfaßt, die relative Helligkeit der gemessenen Farbwerte zu ändern, wobei ihr Farbton und ihre Sättigung unverändert beibehalten werden.

**4.** Verfahren nach einem der vorhergehenden Ansprüche, wobei:

A. der Schritt des Erzeugens einer Mehrzahl von Farbmustern durch die Erzeugung von 16 Farbmustern mit 16 unterschiedlichen Kombinationen von CMYS-Werten festgelegt ist; und
B. der Schritt des Messens der Farbwerte durch das Erhalten der Farbnormwerte für jedes der 16 Farbmuster erhalten wird, die zusammen den Satz der gemessenen Originalfarben ausmachen.

**5.** Verfahren nach Anspruch 4, wobei es sich bei den 16 Kombinationen um die 16 Permutationen von 0% und 100% der Druckfarben handelt.

**6.** Verfahren nach Anspruch 4, wobei es sich bei den Normfarbwerten um RGB-Werte handelt, die durch Messen der XYZ-Normfarbwerte erhalten werden können.

**7.** Verfahren nach einem der vorhergehenden Ansprüche, wobei die Farbmuster auf einer Druck- bzw. Andruckvorrichtung erzeugt werden.


## Revendications

**1.** Méthode de séparation des couleurs pour un procédé de reproduction des couleurs, ledit procédé exigeant une relation entre les valeurs (de tristimulus) de couleurs d'une couleur et ses surfaces de points de reproduction CMY ou CMYK, les valeurs d'encre ou les densités de colorants, ladite méthode comprenant les étapes de :

A. génération d'une pluralité d'échantillons de couleurs ;
B. mesure des valeurs de couleurs desdits échantillons de couleurs pour obtenir une série de couleurs originales mesurées ;
C. définition d'une série de couleurs virtuelles à partir de ladite série de couleurs originales mesurées en modifiant les valeurs de couleurs mesurées ;
D. calcul des coefficients de Neugebauer fondés sur ladite série de couleurs virtuelles.

**2.** Méthode selon la revendication 1, dans laquelle l'étape de modification des valeurs de couleurs mesurées comprend l'augmentation de la saturation des primaires CM, CY et MY, sans modifier les teintes de ces primaires.

**3.** Méthode selon l'une quelconque des revendications précédentes, dans laquelle l'étape de modification des valeurs de couleurs mesurées comprend la modification de la luminosité relative des valeurs de couleurs mesurées, tout en gardant leur teinte et leur saturation inchangées.

**4.** Méthode selon l'une quelconque des revendications précédentes, dans laquelle :

A. l'étape de génération d'une pluralité d'échantillons de couleurs est constituée par la génération de 16 échantillons de couleurs avec 16 combinaisons différentes de valeurs CMYK ; et
B. l'étape de mesure des valeurs de couleurs est constituée par l'obtention des valeurs de tristimulus de chacun des 16 échantillons de couleurs, établissant ladite série de couleurs originales mesurées.

**5.** Méthode selon la revendication 4, dans laquelle lesdites 16 combinaisons sont les 16 permutations d'encres à 0% et à 100%.

6. Méthode selon la revendication 4, dans laquelle les valeurs de tristimulus sont des valeurs RGB, qui peuvent être obtenues en mesurant les valeurs de tristimulus XYZ.

7. Méthode selon l'une quelconque des revendications précédentes, dans laquelle lesdits échantillons de couleurs sont générés sur une presse ou une machine à épreuves.

Figure 1: xy Chromaticity location of the primary (c,m,y) and
secondary (cm, cy, my) virtual colors, compared to measured values.

Figure 2: Black curve generation for 0% GCR, 25% GCR, 50% GCR, 75% GCR and 100% GCR.